# EUROPEAN PATENT SPECIFICATION

(11) **EP 2 886 852 B1**
(45) Date of publication and mention of the grant of the patent: **03.04.2019**
(21) Application number: 14197493.1
(22) Date of filing: 11.12.2014
(51) Int. Cl.: F03B 13/00, E02B 9/08, F03B 13/26

(54) **Construction for extracting, storing and releasing electrical energy**
Konstruktion zur Extraktion, Speicherung und Abgabe von elektrischer Energie
Construction pour extraire, stocker et libérer de l'énergie électrique

(30) Priority: 11.12.2013 BE 201300830
(43) Date of publication of application: 24.06.2015
(73) Proprietor: Deme Blue Energy N.V., 2070 Zwijndrecht (BE)
(72) Inventor: Verschraegen, Frank Robert Marie, B9080 Lochristi (BE); Van Den Bergh, Peter, B2540 Hove (BE); Huygens, Marc, B9200 Dendermond (BE)
(74) Representative: van Someren, Petronella F. H. M.

(56) References cited:
- WO-A1-2013/044978
- US-A- 4 832 528
- US-A- 5 788 411
- W W De Boer ET AL: "THE ENERGY ISLAND - AN INVERSE PUMP ACCUMULATION STATION", , 8 May 2007 (2007-05-08), XP055133163, Retrieved from the Internet: URL:http://proceedings.ewea.org/ewec2007/a llfiles2/341_Ewec2007fullpaper.pdf [retrieved on 2014-08-05]
- Robbe Pollet: "An artificial energy atoll at the belgian coast. | Groep T - My statement blog", , 28 January 2013 (2013-01-28), XP055133193, Retrieved from the Internet: URL:http://gtms1303.wordpress.com/2013/01/ 28/an-artificial-energy-atoll-at-the-belgi an-coast/ [retrieved on 2014-08-05]

## Description

The invention relates to a construction for large-scale and centralized extraction, storing and subsequent release of electrical energy at the desired moment. The invention relates particularly to an offshore construction for extracting, storing and releasing electrical energy.

Devices for generating electrical energy from wind energy are per se known. Wind turbines generate electrical energy by converting the supplied wind energy via a rotation of the wind turbine blades to mechanical energy. This mechanical energy is then converted by means of generators into electrical energy.

The known wind turbines have the drawback that the generated electrical energy is generated during the (random) occurrence of wind and is as such not geared to the immediate energy requirements. A temporary storage, and therefore buffer, is not easy to realize. Coal-fired or nuclear power stations generally produce at a level which is geared to the demand, whereby the storage problem is less of an issue here. The production of such a power station can also be decreased or increased relatively easily. Wind energy is in itself variable. Because no or less production is possible when there is no wind, it is important to be able to produce to the maximum in the case of high wind force and to be able to store the generated electrical energy. Known methods of enabling electrical energy storage comprise for instance the use of batteries or the injection of compressed air into salt mines no longer in use. When there is energy demand the pressurized compressed air is converted here to electricity by means of a generator.

The known storage systems have too short a response time however and/or have a relatively limited capacity.

WO 2013/044978 A1 discloses an offshore storage facility for electrical energy. The disclosed reservoir is built from multiple wall elements, that together form a closed peripheral wall. The elements are connected to a coherent foundation of interlocking grout columns formed in the sea bed. Multiple piles cast into the foundation and protruding from the foundation interlock with the wall elements to form the reservoir wall. The reservoir is placed onto the seabed and closes off an inner water mass from the surrounding sea water mass subject to tides. The facility is provided with energy extracting pump means for pumping inner water to the surrounding sea water mass, and with electrical energy release means which convert a water flow resulting from a difference in level between the inner and surrounding sea water masses to electrical energy.

The article "The energy island - an inverse pump accumulation station" by W.W. de Boer et al of KEMA discloses a construction for storing electrical energy comprising a ring of dikes enclosing a reservoir. The reservoir should be built on naturally occurring layers of clay to prevent undesired seawater leakage into the reservoir.

An object of the present invention is to provide a construction for large-scale and centralized extraction, storing and release of electrical energy which does not have these drawbacks or does so to lesser extent.

The invention provides for this purpose a construction comprising a substantially water-retaining basin with water-retaining bottom and side wall, which basin closes off an inner water mass from an outer water mass subject to tides, wherein the construction is provided with energy extracting pump means for pumping inner water to the outer water mass, and with electrical energy release means which convert a water flow resulting from a difference in level between the inner and outer water masses to electrical energy, wherein the side wall comprises a peripherally closed dike body which is provided with a substantially water-retaining, peripherally closed screen extending to a position below the basin bottom, and with water removing means located within the periphery of the substantially water-retaining screen. The outer water mass subject to tides preferably comprises a sea or ocean, but can also comprise another large water surface such as a lake.

The problem of fluctuations in generation of electricity from wind energy is at least partially solved with a construction according to the invention. The substantially water-retaining basin with water-retaining bottom and side wall is used as reservoir for energy storage. Storage is achieved by at least partially pumping out the basin during off-peak hours, thereby creating a difference in height with the surrounding (sea)water level. Energy can be produced by allowing water to flow for instance from the sea into the basin via turbines arranged in the side wall during peak consumption.

According to the invention a construction is provided wherein the dike body is formed at least partially from locally excavated basin bottom material. Such an embodiment can be obtained in efficient manner, among other reasons because realization of the basin bottom depth goes hand-in-hand with obtaining dike body height.

The invention provides a construction wherein the basin bottom lies lower than the bottom of the outer water mass.

In a suitable embodiment of the invention the construction has the feature that the basin bottom comprises a natural, substantially water-retaining soil layer. A natural, substantially water-retaining soil layer comprises for instance a thick clay layer. This embodiment reduces the risk of water leaking out of the inner water mass through the soil to the outer water mass, or vice versa, but does require a selection of the position of the construction which takes account of the natural conditions. The clay layer preferably has a thickness of at least 20 m, more preferably at least 25 m and most preferably at least 30 m.

In another suitable embodiment of the invention the construction has the feature that the basin bottom comprises a ballast layer. Such a ballast layer preferably comprises a layer of ground material with a thickness of preferably at least 10 m, and most preferably at least 15 m or more. The thickness of the ballast layer is directly related to the difference in height between the water level inside and outside the basin.

Another aspect of the invention relates to a construction wherein the dike body comprises a closable passage for outer water, wherein the passage is provided with electrical energy release means. Suitable electrical energy release means comprise for instance a turbine. In the context of the present application a turbine is defined as a device which converts the flow energy of a fluid (liquid or gas) to mechanical energy by means of a rotating blade system. This mechanical energy can then be used to drive another machine or an electric generator. The turbines are provided in known manner with a housing around the rotor. The housing guides the flow in the desired direction with minimal disruption of the flow profile, this enhancing efficiency. A hydraulic turbine is understood to mean a turbine which makes use of the flow energy of water between two points with a difference in height. A generator is understood to mean a device which can convert mechanical energy generated by a rotating shaft to electrical energy. The conversion is brought about by the movement (rotation) of an electrical conductor through a magnetic field, whereby an electric voltage is generated in the conductor. This results in an electric current in a closed electrical circuit. Using the present embodiment electrical energy can be produced by for instance allowing water from the sea to flow via the turbines arranged in the side wall into the basin during peak hours with high demand for electrical energy.

An embodiment of the invention further relates to a construction wherein the dike body comprises a closable passage for inner water, wherein the passage is provided with electrical energy extracting means. Suitable electrical energy extracting means comprise for instance a pump. Using the present embodiment electrical energy can be stored for instance by at least partially pumping out the basin during off-peak hours with surplus electrical energy, thereby creating a difference in height with the sea level (as potential energy source).

Yet another embodiment of the construction according to the invention has the feature that the passage for the outer water also forms the passage for the inner water. The electrical energy release means can in this embodiment also comprise electrical energy extracting means.

In yet another embodiment of the invention a construction is provided wherein the passage is configured to extract and/or release a substantially constant electric power, substantially irrespective of the difference in level between the inner and the outer water mass. This can be achieved for instance by installing pump turbines, for instance of the Bulb type, in the passage. Such pump turbines are able to allow passage of a controllable and sufficiently large flow rate of seawater so that the power which decreases due to the decreasing difference in level between the inner and the outer water mass is compensated by an increase in the flow rate. The power is proportional to the product of the flow rate and the difference in level between the inner and the outer water mass. A substantially constant electric power of about 50 MW can thus always be extracted or released per pump turbine.

Another aspect of the invention relates to a construction which comprises breakwater dams extending outward at the position of the passage in the dike body.

In an embodiment of the construction the breakwater dams are preferably formed such that they create a funnel-like inlet and/or outlet to and from the passage.

Another aspect of the invention relates to a construction wherein the inner slope of the dike body facing toward the inner water mass has an average steepness lying between vertical and a variation 60 degrees therefrom, more preferably between vertical and a variation 40 degrees therefrom, still more preferably between vertical and a variation 20 degrees therefrom, and most preferably between vertical and a variation 10 degrees therefrom. This embodiment increases the energy storage capacity of the construction while the dike body periphery remains substantially unchanged.

An embodiment of the invention having the same advantages provides a construction wherein the inner slope of the dike body comprises retaining walls, and more preferably L-shaped retaining walls, a horizontal leg of which is directed toward the outer water mass.

According to the invention the inner slope of the dike body comprises as side wall of the construction a peripherally closed dike body which is provided with a substantially water-retaining, peripherally closed screen extending to a position below the basin bottom, and with water removing means located within the periphery of the substantially water-retaining screen. Such accelerated drainage enhances the overall stability of the inner slope by controlling the critical lag of the rapidly varying water level in the water basin.

Suitable water removing means comprise for this purpose throughfeed tubes arranged in or along the dike body and which discharge the drainage water in suitable manner.

In another embodiment of the invention a construction is provided wherein the water removing means comprise a draining layer. In yet another embodiment of the invention a construction is provided wherein the draining layer comprises draining panels. In a further embodiment of the invention a construction is provided wherein the draining layer comprises a course-grained layer of for instance gravel or crushed stone.

An aspect of the invention comprises a construction wherein the substantially water-retaining screen comprises a cement-bentonite mixture. In an embodiment the cement-bentonite screen is formed in the dike body and forms a water-retaining wall therein. A support liquid is provided with cement which cures after a period of time, whereby a wall results with a low water permeability. The cement-bentonite screen can be combined if desired with sheet pile walls for a water-retaining and soil-retaining function and/or with a plastic foil, for instance of HDPE, for the purpose of achieving a flexible solution.

In an embodiment the cement-bentonite screen extends to a position below the basin bottom, wherein the screen extends to a depth of at least 35 m, and more preferably of at least 50 m.

It is advantageous to divide the cement-bentonite screen into a number of panels, wherein primary panels are first excavated and formed, followed by intermediate secondary panels, and the transitions between the primary and secondary panels are then excavated and formed. A continuous screen without joins can thus be manufactured.

A suitable method for manufacturing a cement-bentonite screen can comprise the following steps. Before a start is made with excavation for the wall, guide beams are arranged at ground level. Such guide beams define the dimensioning of the cement-bentonite wall, guide a cable-suspended grab during excavation and prevent caving-in of the ground surface. The wall is then excavated wherein use can be made of a cable-suspended grab with a relatively great weight of its own. The verticality of the excavation can be guaranteed by applying for instance an inclinometer. During excavation the formed trench is filled with a support liquid comprising a mixture of cement, bentonite, water and auxiliary substances in order to guarantee the stability of the trench. Since operations take place in salt water at sea, the support liquid comprises additives for the purpose of reducing or neutralizing the adverse effect of the salt, for instance on the curing of the support liquid. The support liquid remains present in the formed trench and will cure after a period of time. Following curing the wall forms a water-retaining construction. When the support liquid is still fluid, the wall can if desired be provided with a plastic foil which for instance comprises a number of foil panels which are provided with locks and thereby form a continuous whole. In this embodiment the cement-bentonite wall has an additional water retention and has chemical resistance. It is further possible to provide the cement-bentonite screen with a sheet piling. Such a sheet piling is preferably suspended from the guide beams and imparts additional stiffness and moment-absorbing capacity to the water-retaining screen.

An embodiment of the invention comprises a construction wherein the substantially water-retaining screen is obtained by applying a Cutter Soil Mixing (CSM) and/or Soft Soil Improvement (SSI) technique adapted to a marine environment.

In the Cutter Soil Mixing (CSM) technique soil available on site is mixed underground with water and cement so as to form the water-retaining wall. A suitable device comprises a substantially vertically oriented arm which can be moved up and downward and reciprocally. The arm is provided with two pairs of metal wheels rotating in opposite direction to each other and provided with teeth. The arm is lowered slowly into the ground, wherein the ground is dislodged by the toothed wheels and the water/cement mixture (grout) is added. A support structure (soil mix pile) is thus created underground which comprises a mixture of the available soil and grout. The support structure can be provided if desired with concrete reinforcement in the form of for instance steel rebars or beams.

A suitable device comprises a mixing pump installation and a drilling rig. In an embodiment a grout mixture of water and cement-based binders is prepared in the mixing pump installation. This mixture is then pumped under very high pressure to the tip of the drill rod and injected. In a first phase primary piles are alternately formed at a distance such that they can then be joined together by forming secondary piles. Use is optionally made during the drilling of a casing tube, whereby the secondary piles can be arranged intersecting precisely between the primary piles, and a relatively low tolerance in the verticality can be obtained. In order to enhance a correct insertion a concrete guide beam can if desired first be made on which intended centres of the piles are materialized.

In the Soft Soil Improvement (SSI) technique soil is mixed with additives and stabilizing admixtures. The soil is churned up here under very high pressure and mixed with additives at great depth.

It is also possible to obtain the substantially water-retaining screen by arranging secant piles which together form a secant pile wall. This technique comprises of forming concrete or grout piles on site by means of soil removal through a recoverable bush. A secant piling wall is formed by forming a number of mutually intersecting secant piles in a specific sequence.

A suitable device comprises a mast of a drilling device along which a double drill motor is moved up and downward with high moment of torque. The drill motor drives an auger with hollow shaft, as well as a casing tube, if desired in opposite direction. The auger comprises a hollow shaft around which a helical screw is arranged. In a first phase the auger enclosed by the casing tube is drilled to the planned placing depth, wherein the soil inside the casing tube is excavated and transported upward via the auger. Once a load-bearing ground layer has been reached, concrete or a grout mortar is injected under pressure through the hollow auger. The pressure produces an upward force here which presses the auger and casing tube upward out of the ground. Above ground level the soil present between the blades of the auger is removed, after which a reinforcement can optionally be arranged in the helical screw. A screen is formed by thus arranging in the ground a number of secant piles continuously and partially overlapping in the direction of the screen.

A further embodiment of the invention provides a construction wherein the substantially water-retaining screen is strengthened by adding a material injection, steel reinforcement and/or reinforcing foils. In a suitable embodiment a tube with injection openings is inserted into the ground and a material, for instance a monomer or polymer, is injected under pressure into the ground.

The invention will now be further elucidated on the basis of the accompanying figures, without otherwise being limited thereto. In the figures:
figure 1 is a schematic perspective top view of a construction according to an embodiment of the invention;

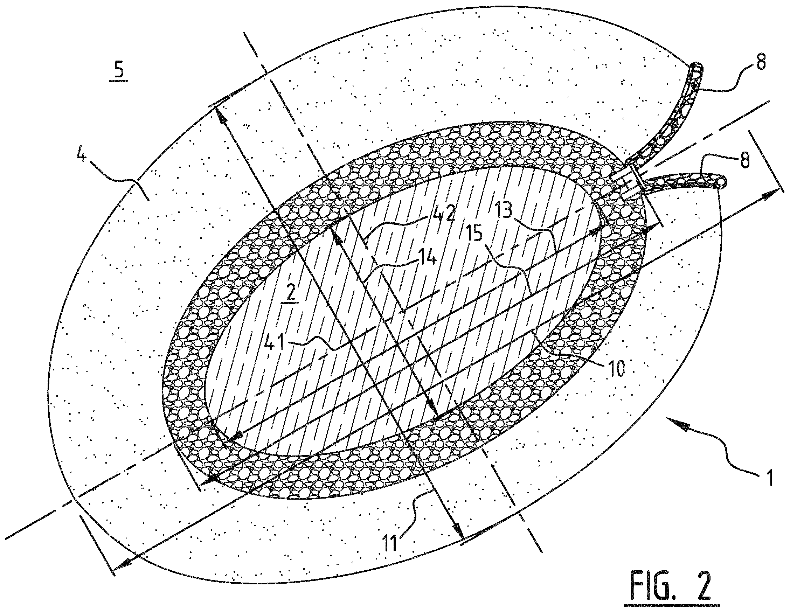

figure 2 is a schematic top view of a construction according to an embodiment of the invention; and
figure 3 is a schematic cross-section along line C-C' of the embodiment of the construction according to the invention shown in figure 2.

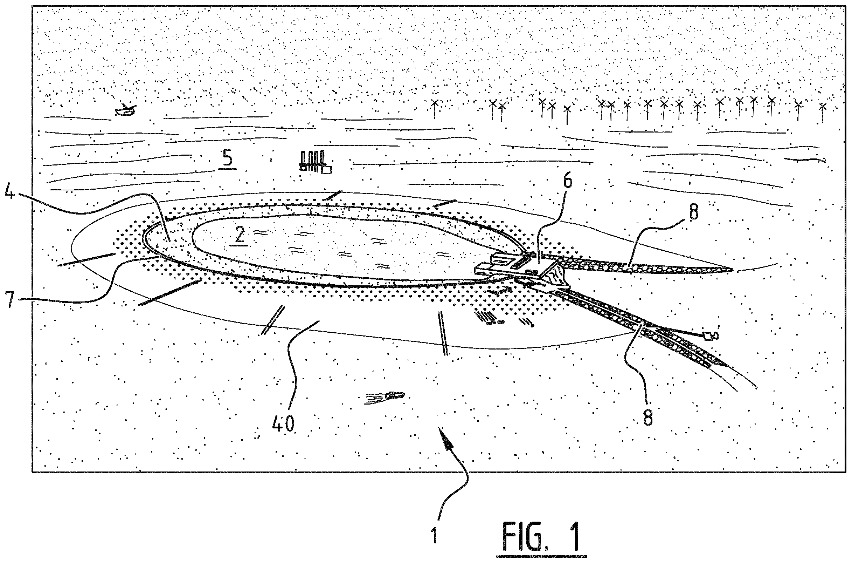

Referring to figure 1, a possible embodiment is shown of a construction 1 for extracting, storing and releasing electrical energy on large scale. Construction 1 comprises a substantially water-retaining basin with water-retaining bottom 3 and side wall 4. Basin 2 closes off an inner water mass 2 from an outer water mass subject to tides, such as the sea 5.

Construction 1 is further provided with closable passages for inner and outer water which are received in a closing construction 6. The closing construction comprises (a number of) caissons which extend as far as the basin bottom 3. Energy extracting pump means and electrical energy release means, not shown in detail, are received in the passages. The energy extracting pump means comprise for instance a number of pumps with which inner water can be pumped to the outer water mass 5. The electrical energy release means comprise for instance a number of turbines with which a water flow from outer water mass 5 to inner water mass 2 resulting from a difference in level between inner water mass 2 and outer water mass 5 can be converted to electrical energy. In a preferred embodiment the closing construction 6 is provided with a number of pump turbines. It is also possible for side wall 4 to be provided with pumps, turbines and/or pump turbines.

Side wall 4 of the construction comprises a dike body 40 in the form of an ellipse which - with the exception of closing construction 6 - is peripherally closed. Dike body 40 is preferably oriented with a longitudinal axis 41 substantially perpendicular to the average tidal flow, this tidal flow defining a front side 5a and a leeward side 5b of construction 1. The short axis 42 of dike body 40 thus runs substantially parallel to the average tidal flow.

Dike body 40 further comprises a substantially water-retaining, peripherally closed screen 7 of a cement-bentonite mixture extending to a position below basin bottom 3. The substantially water-retaining screen 7 can for instance be obtained by applying a Cutter Soil Mixing (CSM) or Soft Soil Improvement (SSI) technique adapted to a marine environment. Water-retaining screen 7 is strengthened if desired by adding a material injection, steel reinforcement and/or reinforcing foils.

Dike body 40 is formed substantially by excavating the seabed material at the position of basin bottom 3 and depositing the excavated material at the position where dike body 40 has to be formed. The excavation of seabed material can be performed for instance using a trailing suction hopper dredger or cutter suction dredger. The bottom material suctioned away by such a dredging device can if desired be transported immediately via a transport conduit to the desired location, more specifically to the seabed to be raised at the position of the intended dike body 40.

In the shown embodiment basin bottom 3 lies at a lower level than the natural seabed 50. It can for instance lie lower than -30 m LAT (Lowest Astronomical Tide). Basin bottom 3 preferably further comprises a natural, substantially water-retaining ground layer, such as for instance a clay layer. In order to further increase the water retention of basin bottom 3, the basin bottom 3 can be provided with a poured ballast layer, for instance of rockfill.

In the shown embodiment construction 1 is provided at the position of the closing construction 6 arranged in dike body 40 with breakwaters 8 which extend outward in the direction of the sea 5 and which are formed such that they create a funnel-like inlet and/or outlet to and from the passages in closing construction 6.

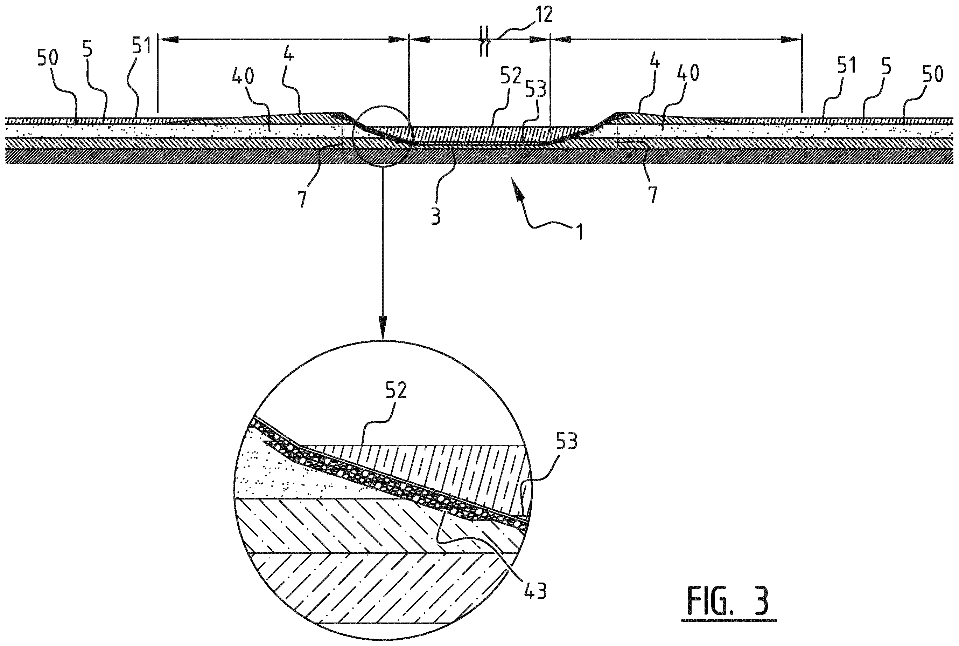

Dike body 40 is further provided on the inner slope toward the water basin with water removing means in the form of for instance drainage pipes (not shown) located at least within the periphery of the substantially water-retaining screen 7. In another embodiment shown in detail in the inset of figure 3 the water removing means comprise a draining layer 43 in the inner slope, formed for instance from draining panels and/or a coarse-grained layer. The water removing means provide for additional stability of dike body 40 which can after all be subject to large and rapidly occurring water level variations inside the internal water basin (51, 52, 53). The associated water level can thus vary for instance from a level of -10 m LAT (designated with 52) to -30 m LAT (designated with 53) and more.

The whole construction 1 can extend over relatively great distances. An overall length 10 can for instance comprise 3.4 km and an overall width 11 for instance 2.25 km. The length 12 of basin bottom 3 can for instance amount to 1 km, where the length 13 and width 14 of the inner water basin can for instance amount to respectively 2 km and 1 km at a level of -10 m LAT. The length 15 between the crests of dike body 40 can for instance amount to 2.50 km.

The invention is by no means limited to the above described exemplary embodiment and many variants are possible within the scope of protection of the appended claims.

## Claims

1. Construction (1) for large-scale and centralized extraction, storing and subsequent release at the desired moment of electrical energy in the order of magnitude of at least 1000 MWh, comprising a substantially water-retaining basin with water-retaining bottom (3) and side wall (4), which basin closes off an inner water mass (2) from an outer water mass (5) subject to tides, wherein the construction is provided with energy extracting pump means for pumping inner water to the outer water mass, and with electrical energy release means which convert a water flow resulting from a difference in level between the inner and outer water masses to electrical energy, wherein the side wall comprises a peripherally closed dike body (40) which is provided with a substantially water-retaining, peripherally closed screen (7) extending to a position below the basin bottom, and with water removing means located within the periphery of the substantially water-retaining screen and providing accelerated drainage of an inner slope of the dike body, wherein the dike body is formed at least partially from locally excavated basin bottom material, and wherein the basin bottom lies lower than the bottom of the outer water mass.

2. Construction as claimed in claim 1, wherein the basin bottom (3) comprises a natural, substantially water-retaining soil layer.

3. Construction as claimed in any of the foregoing claims, wherein the basin bottom (3) comprises a ballast layer.

4. Construction as claimed in any of the foregoing claims, wherein the dike body (40) comprises a closable passage for outer water, wherein the passage is provided with electrical energy release means.

5. Construction as claimed in claim 4, wherein the dike body (40) comprises a closable passage for inner water, wherein the passage is provided with electrical energy extracting means.

6. Construction as claimed in claims 4 and 5, wherein the passage for the outer water also forms the passage for the inner water.

7. Construction as claimed in any of the claims 4-6, wherein the passage is configured to extract and/or release a substantially constant electric power, substantially irrespective of the difference in level between the inner and the outer water mass.

8. Construction as claimed in any of the claims 4-7, wherein it comprises breakwater dams extending outward at the position of the passage in the dike body (40).

9. Construction as claimed in claim 8, wherein the breakwater dams are formed such that they create a funnel-like inlet and/or outlet to and from the passage.

10. Construction as claimed in any of the foregoing claims, wherein an inner slope of the dike body facing toward the inner water mass has an average steepness lying between vertical and a variation 20 degrees therefrom.

11. Construction as claimed in claim 10, wherein the inner slope of the dike body comprises L-shaped retaining walls, a horizontal leg of which is directed toward the outer water mass.

12. Construction as claimed in any of the foregoing claims, wherein the water removing means comprise throughfeed tubes which discharge the drainage water in suitable manner..

13. Construction as claimed in any of the foregoing claims, wherein the water removing means comprise a draining layer (43).

14. Construction as claimed in claim 13 wherein the draining layer comprises draining panels.

15. Construction as claimed in claim 13 wherein the draining layer (43) comprises a course-grained layer.

16. Construction as claimed in any of the foregoing claims, wherein the substantially water-retaining screen (7) comprises a cement-bentonite mixture.

17. Construction as claimed in any of the foregoing claims, wherein the substantially water-retaining screen is obtained by applying a Cutter Soil Mixing (CSM) and/or Soft Soil Improvement (SSI) technique adapted to a marine environment.

18. Construction as claimed in any of the foregoing claims, wherein the substantially water-retaining screen is strengthened by adding a material injection, steel reinforcement and/or reinforcing foils.

## Patentansprüche

1. Anlage (1) zum groß angelegten und zentralen Gewinnen, Speichern und anschließenden Freisetzen von elektrischer Energie in der Größenordnung von mindestens 1000 MW/h zum gewünschten Zeitpunkt, die ein im Wesentlichen wasserrückhaltendes Becken mit Wasserrückhalteboden (3) und Seitenwand (4) aufweist, wobei das Becken eine innere Wassermasse (2) von einer äußeren, den Gezeiten unterliegenden Wassermasse (5) abtrennt, wobei die Anlage energiegewinnende Pumpenmittel zum Pumpen von Innenwasser zur äußeren Wassermasse und Mittel zum Freisetzen von elektrischer Energie bereitstellt, die einen Wasserstrom in elektrische Energie umwandeln, der aus einem Pegelunterschied zwischen der inneren und der äußeren Wassermasse entsteht, wobei die Seitenwand einen am Rand geschlossenen Deichkörper (40) aufweist, der eine im Wesentlichen wasserrückhaltende, am Rand geschlossene Trennwand (7) bereitstellt, die sich bis zu einer Position unterhalb des Beckenbodens erstreckt, sowie Wasserentfernungsmittel, die sich im Umfang der im Wesentlichen wasserrückhaltenden Trennwand befinden und eine beschleunigte Drainage einer Innenböschung des Deichkörpers bereitstellen, wobei der Deichkörper zumindest teilweise aus vor Ort ausgehobenem Beckenbodenmaterial gebildet ist, und wobei der Beckenboden niedriger als der Boden der äußeren Wassermasse liegt.

2. Anlage nach Anspruch 1, wobei der Beckenboden (3) eine natürliche, im Wesentlichen wasserrückhaltende Bodenschicht aufweist.

3. Anlage nach einem der vorherigen Ansprüche, wobei der Beckenboden (3) eine Ballastschicht aufweist.

4. Anlage nach einem der vorherigen Ansprüche, wobei der Deichkörper (40) einen schließbaren Durchgang für das Außenwasser aufweist, wobei der Durchgang mit Mitteln zum Freisetzen von elektrischer Energie bereitgestellt wird.

5. Anlage nach Anspruch 4, wobei der Deichkörper (40) einen schließbaren Durchgang für das Innenwasser aufweist, wobei der Durchgang mit Mitteln zum Gewinnen von elektrischer Energie bereitgestellt wird.

6. Anlage nach den Ansprüchen 4 und 5, wobei der Durchgang für das Außenwasser auch den Durchgang für das Innenwasser bildet.

7. Anlage nach einem der Ansprüche 4 bis 6, wobei der Durchgang so konfiguriert ist, dass er eine im Wesentlichen konstante elektrische Energie im Wesentlichen unabhängig vom Pegelunterschied zwischen der inneren und der äußeren Wassermasse gewinnt und/oder freisetzt.

8. Anlage nach einem der Ansprüche 4 bis 7, wobei die Anlage Wellenbrecherdämme aufweist, die sich an der Position des Durchgangs im Deichkörper (40) nach außen erstrecken.

9. Anlage nach Anspruch 8, wobei die Wellenbrecherdämme so gebildet sind, dass sie einen trichterähnlichen Einlass und/oder Auslass zu und von dem Durchgang bilden.

10. Anlage nach einem der vorherigen Ansprüche, wobei eine Innenböschung des Deichkörpers, die der inneren Wassermasse zugewandt ist, eine durchschnittliche Steilheit aufweist, die zwischen der Vertikalen und einer Abweichung von 20 Grad davon liegt.

11. Anlage nach Anspruch 10, wobei die Innenböschung des Deichkörpers L-förmige Stützwände aufweist, deren horizontaler Schenkel in Richtung der äußeren Wassermasse angeordnet ist.

12. Anlage nach einem der vorherigen Ansprüche, wobei die Wasserentfernungsmittel Durchlassrohre aufweisen, die das Drainagewasser in geeigneter Weise ableiten.

13. Anlage nach einem der vorherigen Ansprüche, wobei die Wasserentfernungsmittel eine Drainageschicht (43) aufweisen.

14. Anlage nach Anspruch 13, wobei die Drainageschicht Drainageplatten aufweist.

15. Anlage nach Anspruch 13, wobei die Drainageschicht (43) eine grobkörnige Schicht aufweist.

16. Anlage nach einem der vorherigen Ansprüche, wobei die im Wesentlichen wasserrückhaltende Trennwand (7) eine Zement-Bentonit-Mischung aufweist.

17. Anlage nach einem der vorherigen Ansprüche, wobei die im Wesentlichen wasserrückhaltende Trennwand durch Anwenden einer an die Meeresumwelt angepassten Technik des Cutter-Soil-Mixing-Verfahrens (CSM-Verfahren) und/oder der Weichbodenverbesserung (SSI) erreicht wird.

18. Anlage nach einem der vorherigen Ansprüche, wobei die im Wesentlichen wasserrückhaltende Trennwand zusätzlich durch Materialeinspritzung, Stahlarmierung und/oder Verstärkungsfolien verstärkt wird.

## Revendications

1. Construction (1) servant, à grande échelle et de façon centralisée, à extraire, stocker et libérer ultérieurement, au moment souhaité, de l'énergie électrique dans un ordre de grandeur d'au moins 1000 MWh, comprenant un bassin retenant sensiblement l'eau, doté d'un fond (3) retenant l'eau et d'une paroi latérale (4), lequel bassin sépare une masse d'eau intérieure (2) d'une masse d'eau extérieure (5) soumise aux marées, étant entendu que la construction est dotée de moyens formant pompe d'extraction d'énergie servant à pomper l'eau intérieure jusqu'à la masse d'eau d'extérieure, et de moyens de libération d'énergie électrique qui convertissent en énergie électrique un écoulement d'eau résultant d'une différence de niveau entre les masses d'eau intérieure et extérieure, étant entendu que la paroi latérale comprend un corps (40) formant digue fermée à sa périphérie qui est doté d'un écran (7) retenant sensiblement l'eau et fermé à sa périphérie qui s'étend jusqu'à une position située sous le fond du bassin, et de moyens d'enlever l'eau situés à la périphérie de l'écran retenant sensiblement l'eau et assurant un drainage accéléré d'une pente interne du corps formant digue, étant entendu que le corps formant digue est constitué au moins partiellement de matériau excavé localement du fond du bassin, et étant entendu que le fond du bassin se trouve plus bas que le fond de la masse d'eau extérieure.

2. Construction selon la revendication 1, étant entendu que le fond (3) du bassin comprend une couche de sol naturel retenant sensiblement l'eau.

3. Construction selon l'une quelconque des revendications précédentes, étant entendu que le fond (3) du bassin comprend une couche de ballast.

4. Construction selon l'une quelconque des revendications précédentes, étant entendu que le corps (40) formant digue comprend un passage refermable destiné à l'eau extérieure, étant entendu que le passage est doté de moyens de libération d'énergie électrique.

5. Construction selon la revendication 4, étant entendu que le corps (40) formant digue comprend un passage refermable destiné à l'eau intérieure, étant entendu que le passage est doté de moyen d'extraction d'énergie électrique.

6. Construction selon les revendications 4 et 5, étant entendu que le passage destiné à l'eau extérieure constitue aussi le passage destiné à l'eau intérieure.

7. Construction selon l'une quelconque des revendications 4-6, étant entendu que le passage est configuré en vue d'extraire et/ou de libérer une énergie électrique sensiblement constante, de façon sensiblement indépendante de la différence de niveau entre la masse d'eau intérieure et la masse d'eau extérieure.

8. Construction selon l'une quelconque des revendications 4-7, étant entendu qu'elle comprend des digues brise-lames s'étendant vers l'extérieur au niveau de la position du passage dans le corps (40) formant digue.

9. Construction selon la revendication 8, étant entendu que les digues brise-lames sont constituées de telle sorte qu'elles créent une entrée et/ou une sortie en forme d'entonnoir menant au, et venant du, passage.

10. Construction selon l'une quelconque des revendications précédentes, étant entendu qu'une pente intérieure du corps formant digue faisant face à la masse d'eau intérieure présente une déclivité moyenne se situant entre la verticale et une variation de 20 degrés par rapport à elle.

11. Construction selon la revendication 10, étant entendu que la pente intérieure du corps formant digue comprend des murs de retenue en forme de L dont une branche horizontale est dirigée vers la masse d'eau extérieure.

12. Construction selon l'une quelconque des revendications précédentes, étant entendu que les moyens d'enlever l'eau comprennent des tubes traversants qui déversent l'eau de drainage de manière adaptée.

13. Construction selon l'une quelconque des revendications précédentes, étant entendu que les moyens d'enlever l'eau comprennent une couche de drainage (43).

14. Construction selon la revendication 13, étant entendu que la couche de drainage comprend des panneaux de drainage.

15. Construction selon la revendication 13, étant entendu que la couche de drainage (43) comprend une couche à gros grains.

16. Construction selon l'une quelconque des revendications précédentes, étant entendu que l'écran (7) retenant sensiblement l'eau comprend un mélange ciment-bentonite.

17. Construction selon l'une quelconque des revendications précédentes, étant entendu que l'on obtient l'écran retenant sensiblement l'eau en appliquant une technique de mélange du sol par fraisage (CSM) et/ou d'amélioration des sols meubles (SSI) adaptée à un environnement marin.

18. Construction selon l'une quelconque des revendications précédentes, étant entendu que l'on consolide l'écran retenant sensiblement l'eau en ajoutant une injection de matériau, un renforcement en acier et/ou des clinquants de renfort.
